# EUROPEAN PATENT APPLICATION

(11) **EP 4 725 997 A1**
(43) Date of publication of application: **15.04.2026**
(21) Application number: 24205878.2
(22) Date of filing: 10.10.2024
(51) Int. Cl.: C09D 11/101, C09D 11/34, C09D 11/38

(54) **RADIATION-CURABLE INKJET INK COMPOSITION**

(71) Applicant: Canon Production Printing Holding B.V., 5914 HH Venlo (NL)
(72) Inventor: ZHAN, Yuanyuan, Venio (NL); WILLEMSE, Robin X.E., Venio (NL); FRENCKEN, Jordi, Venio (NL)
(74) Representative: Canon Production Printing IP Department

(57) **Abstract**

The present invention relates to a radiation curable ink composition comprising a gellant. The present invention further relates to an ink set comprising such ink composition. The present invention further relates to a method for making such ink composition and a printing method using such ink composition.

## Description

The present invention relates to an ink composition comprising a gelling agent, to an ink container comprising such ink composition, to an ink set comprising such ink composition and to a gelling agent. The present invention further relates to a method for preparing an ink composition, as well as to a method for preparing a gelling agent. In addition, the present invention relates to a method for applying an image onto a recording medium.

### Background of the invention

Radiation-curable inkjet ink compositions are known in the art. These ink compositions comprise one or more radiation-curable components. A special class of radiation-curable inkjet ink compositions are phase change radiation-curable inkjet ink compositions. These inks are fluid at elevated temperature and become solid -even if not yet cured- at lower temperatures. These inks are typically jetted at elevated temperatures. Phase change inks may become solid or *semi*-solid upon cooling down on a recording medium, e.g. a sheet of paper. As a result, spread of a droplet of ink on the recording medium may be decreased and color bleeding may be prevented. An example of a phase change radiation-curable inkjet ink is a gelling radiation-curable inkjet ink. Gelling radiation-curable inkjet ink compositions typically comprise a gelling agent. Gelling agents are also known in the art as gellants or thickeners. Examples of gelling agents used in gelling radiation curable inkjet ink compositions are waxes, such as natural waxes and long chain carboxylic acids, and ketones. The presence of a gelling agent can cause a viscosity increase in the inkjet ink composition upon cooling of the ink composition. The viscosity increase in the ink composition should be sufficient, to adequately control droplet spreading. The use of a gelling may allow to postpone curing of the ink after applying the ink onto the recording medium.

Gelling agents are known in the art. However, a need remains for additional gelling agents, suitable for use in radiation-curable gelling inks.

It is therefore an object of the present invention to provide an alternative gelling radiation curable ink composition. It is a further object of the invention to provide an alternative gelling agent.

### Summary of the invention

The object of the invention is achieved in a radiation-curable inkjet ink composition, comprising a radiation curable component and a gelling agent, wherein the gelling agent comprises a thiol functional group.

### Radiation-curable component

A radiation-curable component is a component that may react (e.g. polymerize) under influence of suitable radiation, such as electromagnetic radiation, e.g. ultraviolet (UV) radiation. Examples of radiation-curable components are epoxides and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

### Gelling agent

The radiation-curable inkjet ink composition comprises a gelling agent. The gelling agent is a component comprising a thiol functional group. A thiol functional group is a -SH functional group.

The gelling agent may be present in an amount of from 0.3 wt% to 15 wt%, based on the total amount of the radiation-curable ink composition. For example in an amount of from 0.5 wt% to 10 wt%, based on the total amount of the radiation-curable ink composition.

### Colorant

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color.

### Further components

The radiation-curable medium may further comprise at least one inhibitor. An inhibitor is a component that prevent (inhibits) unwanted polymerization of the radiation-curable compound. Inhibitors may be added to the radiation curable inkjet ink composition to increase the shelf life of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and anti-fungi components.

In an aspect of the invention, a gelling agent is provided. The gelling agent is a component comprising a thiol functional group. A thiol functional group is a -SH functional group.

In an embodiment, the gelling agent is a compound according to formula I: 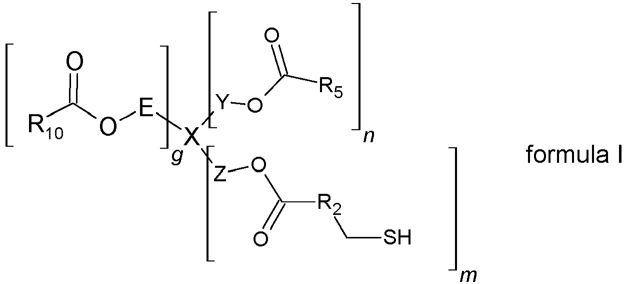 , wherein X is selected from C, CH, N , CCH₃, CCH₂CH₃ and CCH₂OCHC; E, Y and Z are each individually selected from C_{n'}H_{2n'}, [- C_{2'}H₄O-]_{b}, [-CH(CH₃)CH₂O-]_{c} wherein n' is an integer in the range of from 1 to 15 , b is an integer in the range of from 1 to 10 and c is an integer in the range of from 1 to 10; R₅ and R₁₀ are each individually selected from CₜH₂ₜ₊₁, (-CₜH₂ₜOᵤS_{w}-) or (-CₜH_{(2t-t')}O_{q}Sᵣ-), wherein t is an integer in the range of 1 to 30, u is an integer in the range of from 0 to 15, w is an integer in the range of from 0 to 5, t' is an even number in the range of from 2 to 8, n and g are each individually selected from an integer in the range of from 0 to 5; R₂ is selected from an alkyl, an aryl, an alkylaryl, (-CₚH₂ₚO_{q}Sᵣ-) or (-CₚH_{(2p-p')}O_{q}Sᵣ-), wherein p is an integer in the range of 1 to 30, q is an integer in the range of from 0 to 15, r is an integer in the range of from 0 to 5, p' is an even number in the range of from 2 to 8, m is an integer in the range of from 1 to 6. The alkyl, aryl or alkylaryl group may have 1 to 40 carbon atoms, The alkyl group may be linear, branched and/or may comprise a cyclic structure. Preferably, the alkyl is linear.

Examples of components according to formula I are shown in table 1.

**Table 1: examples according to formula I:**

| **Molecular structure** | **Component** |
|---|---|
| 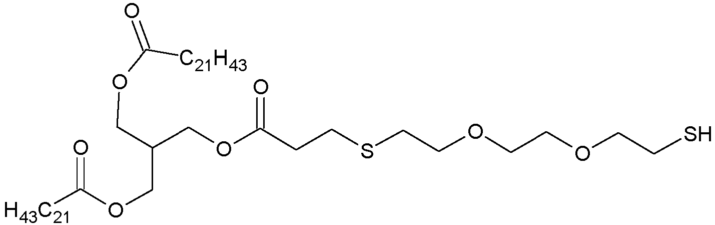 | Formula I-1 |
| 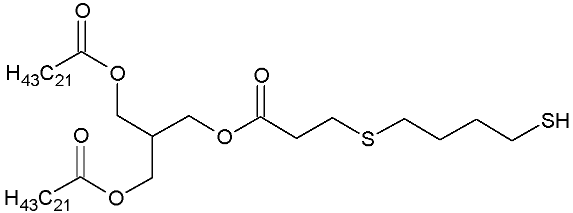 | Formula I-2 |
| 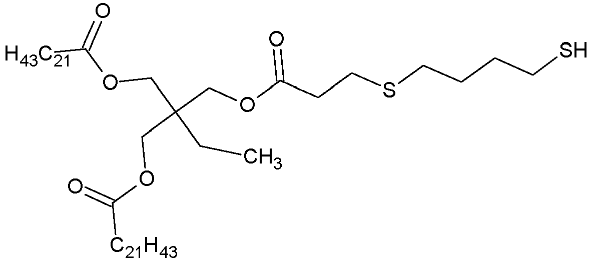 | Formula I-3 |
| 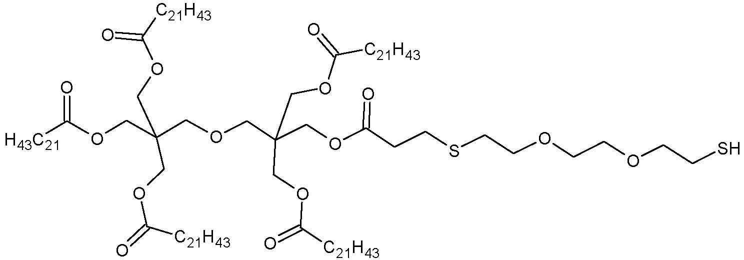 | Formula I-4 |

In an embodiment, the gelling agent is a compound according to formula II or III: 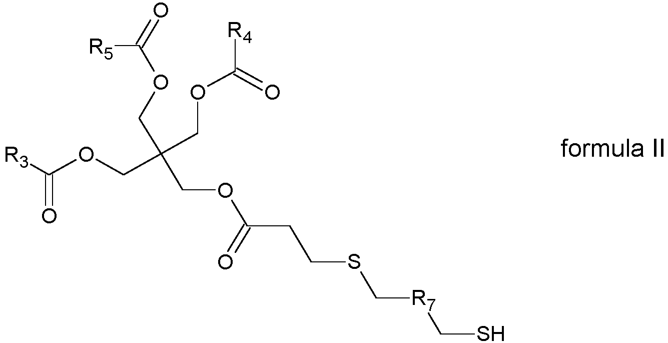 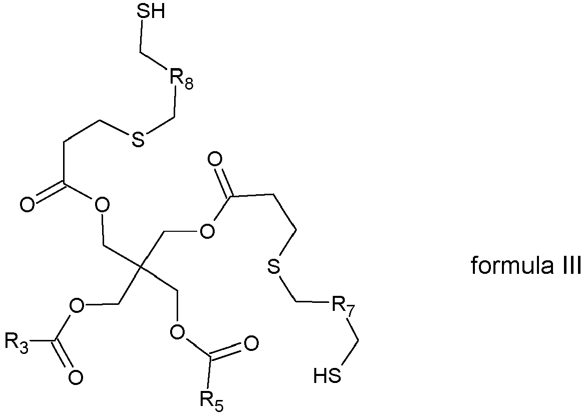 ,wherein R₃, R₄ and R₅ are each individually selected from CₜH₂ₜ₊₁, (-CₜH₂ₜOᵤS_{w}-) or(-CₜH_{(2t-t')}O_{q}Sᵣ-), wherein t is an integer in the range of 1 to 30, u is an integer in the range of from 0 to 15, w is an integer in the range of from 0 to 5, t' is an even number in the range of from 2 to 8; q is an integer in the range of from 0 to 15; r is an integer in the range of from 0 to 5; and wherein R₇ and R₈ are each individually selected from a CₘC₂ₘ moiety, wherein m is an integer in the range of from 1 to 30, an aromatic group, alkylaryl moiety and oliogoethylene glycol moiety, a polyethylene glycol moiety, an oligopropylene glycol moiety, a polypropylene glycol moiety, a oligoethyleneglycol propyleneglycol moiety and a oligoethyleneglycol propyleneglycol moiety.

An oligoethylene glycol moiety is a unit having two to four ethylene glycol moieties. A polyethylene glycol moiety is a unit having five or more ethylene glycol moieties. An oligopropylene glycol moiety is a unit having two to four propylene glycol moieties. A polypropylene glycol moiety is a unit having five or more propylene glycol moieties. An oligoethyleneglycol propyleneglycol moiety is a unit having two to four ethylene glycol or propylene glycol units, of which at least one ethylene glycol moiety and at least one propyleneglycol moiety. An polyethyleneglycol propyleneglycol moiety is a unit having more than four ethylene glycol or propylene glycol moiety, of which at least one ethylene glycol moiety and at least one propyleneglycol moiety.

In an embodiment, R₃, R₄ and R₅ may not comprise a sulfur atom. In a further embodiment, R₃, R₄ and R₅ may be alkyl groups. The alkyl groups may be the same or different. The alkyl groups may be linear or branched. Optionally, one or more of the alkyl groups may comprise a cyclic structure. Preferably, the alkyl groups may be linear.

Examples of components according to formula II are shown in table 2. Examples of components according to formula III are shown in table 3.

**Table 2: examples according to formula II:**

| **Molecular structure** | **Component** |
|---|---|
| 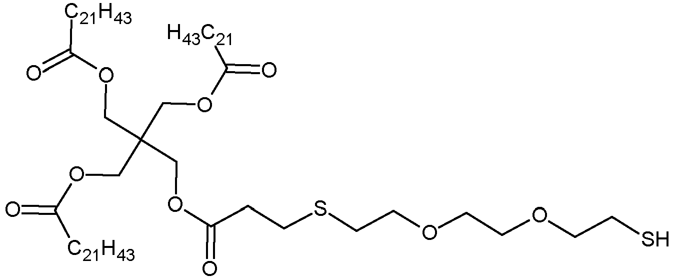 | Formula II-1 |
| 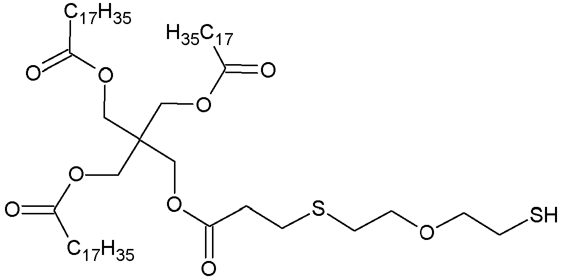 | Formula II-2 |
| 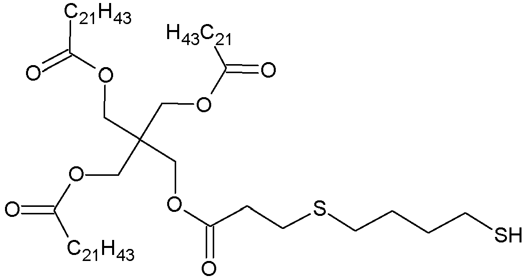 | Formula II-3 |
| 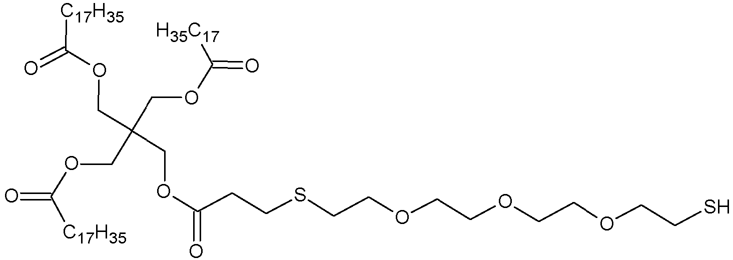 | Formula II-4 |
| 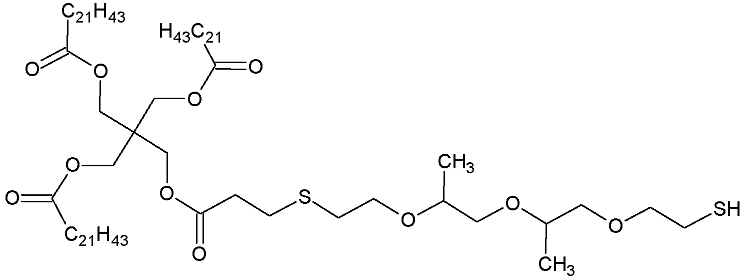 | Formula II-5 |
| 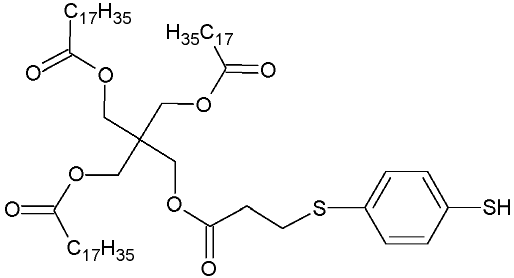 | Formula II-6 |
| 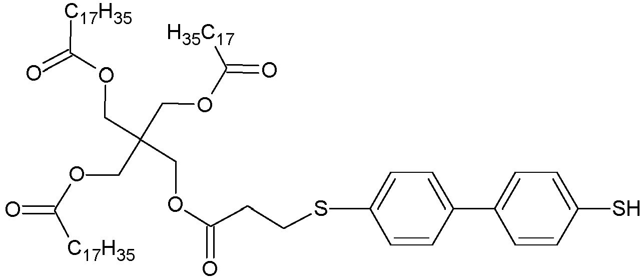 | Formula II-7 |

**Table 3: examples according to formula III:**

| **Molecular structure** | **Component** |
|---|---|
| 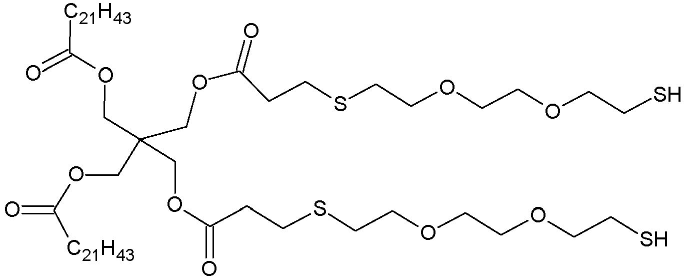 | Formula III-1 |
| 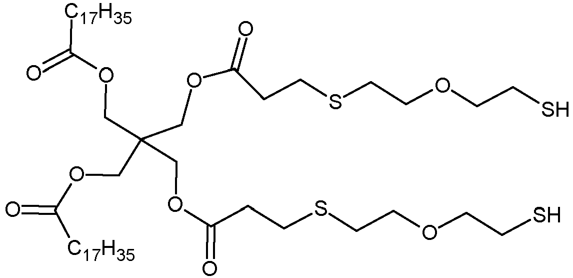 | Formula III-2 |
| 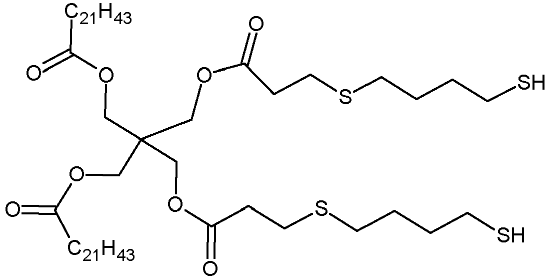 | Formula III-3 |
| 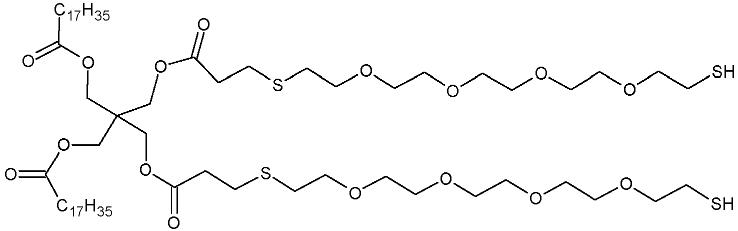 | Formula III-4 |
| 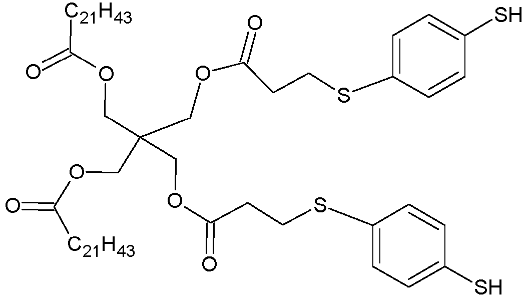 | Formula III-5 |
| 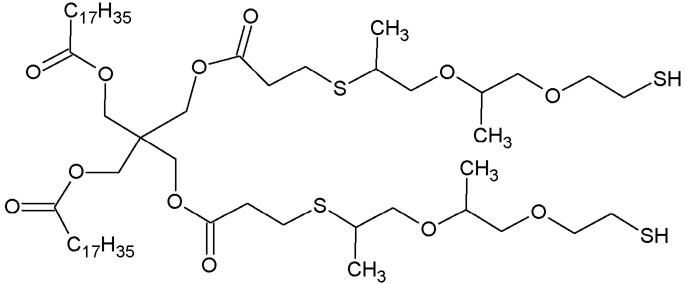 | Formula III-6 |
| 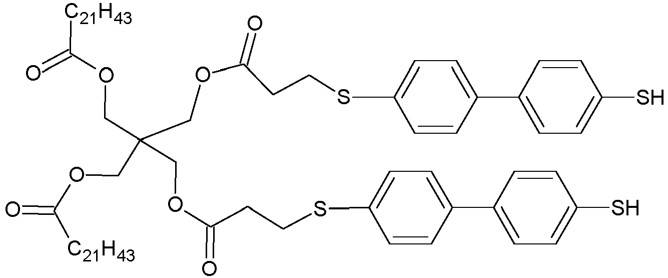 | Formula III-7 |

In an embodiment, the radiation curable component in the ink composition is a monofunctional acrylate. Presence of a monofunctional acrylate may improve the hardness and flexibility of the ink layer after curing.

In a further embodiment, the ink comprises more than one monofunctional acrylate.

In an embodiment, the radiation curable ink comprises an acrylate having two or more acrylate functional groups. An acrylate may undergo a polymerization reaction when irradiated by suitable radiation, such as UV radiation. Hence, a polyacrylate polymer may be formed when an inkjet ink composition comprising an acrylate is cured, thereby hardening the ink. An acrylate molecule having two or more acrylate functional groups may react with two or more other acrylate molecules and hence, a polymeric network may be formed. Examples of acrylates having two or more acrylate functional groups are known in the art.

In an embodiment, an ink set is provided, wherein the ink set comprises a radiation-curable inkjet ink composition according to the present invention.

An ink set may comprise a plurality of different inks. For example, the ink set may be a CMYK ink set, comprising a Yellow, a Magenta, a Cyan and a blacK ink composition. At least one of the ink compositions in the ink set may be an ink comprising a gelling agent, wherein the gelling agent is a compound according to formula I as described above. Preferably, a plurality of the ink compositions in the ink set may comprise a gelling agent, wherein the gelling agent is a compound according to formula I as described above. The ink set may further comprise additional inks, such as white, red, green, light magenta, light cyan and/or grey ink and/or colorless ink. Further, the ink set may comprise one or more metallic ink compositions. Optionally, the ink set may comprise an undercoat and/or an overcoat composition. The undercoat and/or overcoat composition may be colorless ink compositions.

In an embodiment, an ink container is provided, the ink container comprising a radiation-curable ink composition according to the present invention.

The ink container may be configured to hold an amount of ink. The container may be used to store and transport ink. The ink container may be connectable to a printer, to allow transferring the ink from the container to the printer. The container may stay connected to the printer and gradually supply ink to the printer. Alternatively, the ink comprised in the container may be transferred to the printer and stored in the printer in an internal ink reservoir.

The ink container may be for example an ink bag, an ink bottle, an ink cartridge, or an ink bag, such as a bag-in-box. Preferably, the ink container is not transparent for light and UV-radiation.

In an embodiment, a set of ink containers may be provided, each container of the set of containers comprising an individual ink from a set of inks.

In an aspect of the invention, a method for preparing the gelling agent according to formula II or formula III is provided, the method comprising the steps of:
- Providing a compound according to formula II' or Formula III'; 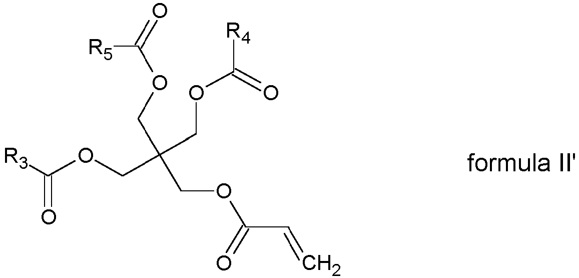 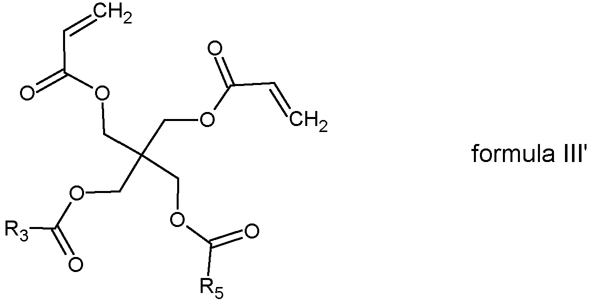
- Providing SH(CH₂)R₇(CH₂)SH; and
- If a compound according to Formula III' is used, providing SH(CH₂)R₈(CH₂)SH;
- Dissolving the reagents in a solvent;
- Allowing the reagents to react.

R₃, R₄ and R₅ are each individually selected from CₜH₂ₜ₊₁, (-CₜH₂ₜOᵤS_{w}-) or (-CₜH_{(2t-t')}O_{q}Sᵣ-), wherein t is an integer in the range of 1 to 30, u is an integer in the range of from 0 to 15, w is an integer in the range of from 0 to 5, t' is an even number in the range of from 2 to 8; and wherein R₇ and R₈ are each individually selected from a CₘC₂ₘ moiety, wherein m is an integer in the range of from 1 to 30, an aromatic group, alkylaryl moiety, an oliogoethylene glycol moiety, a polyethylene glycol moiety, an oligopropylene glycol moiety, a polypropylene glycol moiety, a oligoethyleneglycol propyleneglycol moiety and a oligoethyleneglycol propyleneglycol moiety. Optionally, a catalyst may be provided to increase the reaction speed. In an embodiment, the compounds SH(CH₂)R₇(CH₂)SH; and optionally SH(CH₂)R₈(CH₂)SH may be used in excess.

At the end of the reaction, the product may be purified.

In an aspect of the invention, a method for preparing a radiation-curable inkjet ink composition is provided, the method comprising the steps of:
- providing a radiation-curable component;
- providing a gelling agent, the gelling agent comprises a thiol functional group;
- mixing the radiation curable component and the gelling agent.

The radiation-curable component and the ester compound may be provided. Optionally, additional components may be provided, for example an additional solvent. The radiation-curable component and the gelling agent may be provided neat or they may be provided in a solution or dispersion. Optionally, a colorant may be provided. In case the colorant is a pigment, the pigment is preferably provided as a dispersion, such as an aqueous pigment dispersion. The components may be provided at once, or the components may be added subsequently. The components may be added in any suitable order. In case a dispersible component is added (e.g. a pigment), such dispersible component may be preferably added after the other components of the ink composition are provided. Mixing of the components may be carried out at any suitable temperature, for example room temperature.

In an aspect of the invention, a method for applying an image onto a recording medium is provided, the method comprising the steps of:
a. jetting droplets of a radiation-curable inkjet ink composition according to the present invention onto the recording medium;
b. curing the radiation-curable inkjet ink composition by irradiating the ink composition using UV radiation.

In the method, an image is applied onto a recording medium. In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable inkjet ink composition using an inkjet print head. The recording medium may be a sheet-like medium, such as a sheet of paper or a sheet of vinyl. Alternatively, the recording medium may be a web, for example an endless belt. The web may be made of a suitable material. Optionally, the image may be dried after it has been applied onto the intermediate transfer member.

In the method, in step b), the radiation-curable inkjet ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

### Brief description of the drawings

These and further features and advantages of the present invention are explained hereinafter with reference to the accompanying drawings showing non-limiting embodiments and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic diagram of a control unit of a reprographic system according to Fig. 1 or 2;
Fig. 4 shows the measured gloss levels for print made in the comparison experiment.

In the drawings, same reference numerals refer to same elements.

### Detailed description of the drawings

The present invention will now be described with reference to the accompanying drawings, wherein the same reference numerals have been used to identify the same or similar elements throughout the several views.

### Printing system

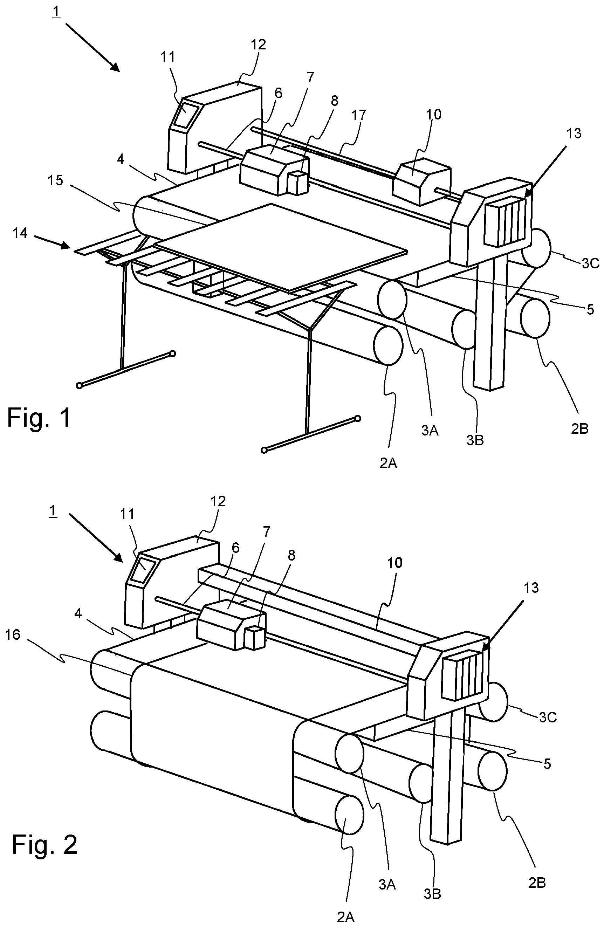

Fig. 1 shows a printing apparatus. A printing apparatus is also known as printer. The printing apparatus 1 comprises an scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is page-wide curing array 10. The page-wide curing array 10 extends in the main scanning direction. The page-wide curing array does not move in operation in the main scanning direction. The page-wide array may move in the direction of medium transport, which is a direction perpendicular to the scanning direction.

The page-wide curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of, or in interaction with the page-wide curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium after printing, e.g. a posttreatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Control

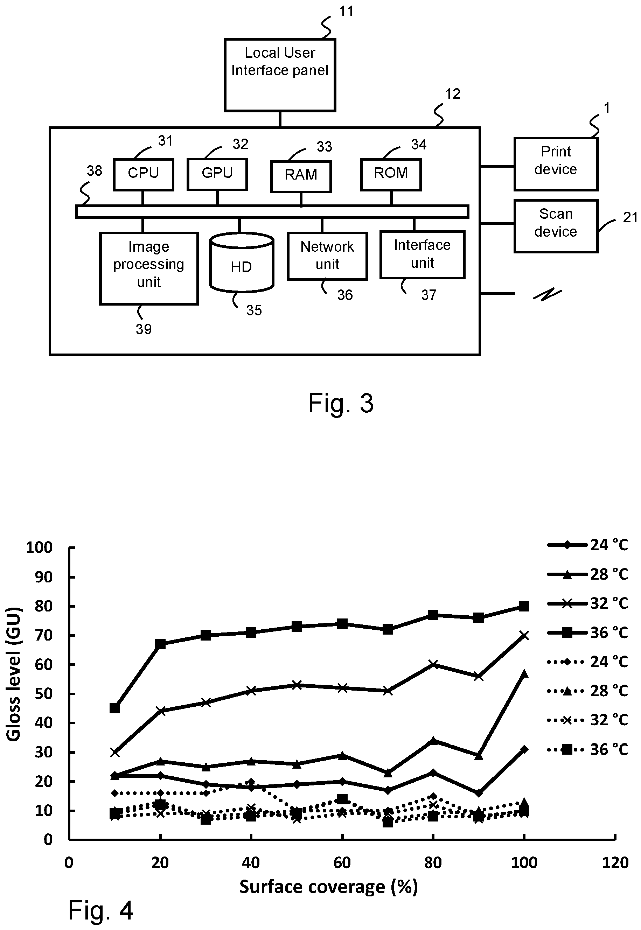

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 21 and to the printing system 1. The network unit 36 connects the control unit 12 to the network N and is designed to provide communication with the workstations (not shown) and with other devices 21 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Experiments and examples

### Materials

Behenic acid were obtained from TCI chemicals; pentaerythritol, chloroform, triethylamine, methanol, dichloromethane, magnesiumsulfate, 3,6-Dioxa-1,8-octanedithiol, acryloyl chloride and 1,8-Diazabicyclo[5.4.0]undec-7-ene (DBU) were obtained from Sigma-Aldrich.

SR355, SR339C, SR506D, SR531 and CN991 were obtained from Arkema, Genomer 5161, ITX and EDB were obtained from Rahn, BYK 333 was obtained from BYK, BAPO was obtained from Arkema (Lambson), phenothiazine was obtained from Allessa. All chemical were used as received.

Avery MPI2000 HOP, which was obtained from Avery Denison was used as recording medium.

### Image formation

Prints were prepared by printing the ink using a Colorado 1630 printer. Avery MPI2000 HOP was used as recording medium.

### Gloss

The gloss of an image was measured after the image had been printed and cured. The gloss was measured using a micro-TRI glossmeter obtained from BYK-Gardner GmbH using the internal calibration and measurement method. The micro-TRI gloss measuring device simultaneously measures the gloss under an angle of 20°, 60° and 85°, respectively. The gloss level reported is the gloss level measured under an angle of 60°. A high value relates to a high gloss level, a low value relates to a low gloss level (matt).

### Example 1: Synthesis of Compound II-1

Compound 11-2 was prepared in three steps. First, pentaerythrityl-tri(docosanoate)-monoacrylate is prepared by two-step synthesis: (1-1) first-step synthesis of pentaerythrityl-tridocosanoate via esterification, and (1-2) second-step synthesis of pentaerythrityl-tri(docosanoate)-monoacrylate via esterification.

Pentaerythrityl-tri(docosanoate)-monoacrylate was reacted with dithiol to yield compound II-1 in reaction 1-3. The synthesis steps are described below.

### 1-1: Synthesis of Pentaerythrityl-tridocosanoate (3)

Pentaerythritol **1** (27.2 g, 200 mmol) and behenic acid **2** (204 g, 600 mmol) were mixed in a 500 mL round bottom flask and heated to 190°C for 20 h, and then further heated to 200°C for another 48 h. This results in a statistical mixture of 5% mono-, 22% di-, 42% tri-, and 31% tetra-functionalized pentaerythritol. The product **3** was used in the next step without further purification. Chemical structures of the product **3** are determined by ¹H NMR and ¹³C NMR analysis. Results are shown below.

¹H NMR (399 MHz, CDCl₃): δ 4.22 (s, 0.11 H), 4.14 (s, 1.23 H), 4.11 (s, 5.10 H), 3.65 (s, 0.28 H), 3.57 (s, 0.88 H), 3.49 (s, 0.86 H), 1.60 (m, *J =* 7.0 Hz, 6 H), 1.25 (s, 108 H), 0.88 (t, *J* = 6.7 Hz, 9 H) ppm. ¹³C NMR (101 MHz, CDCl₃): δ 174.55, 173.85, 173.27, 77.37, 77.25, 77.05, 76.73, 63.69, 62.78, 62.66, 62.39, 62.16, 62.03, 60.75, 45.36, 44.98, 43.93, 41.84, 34.24, 34.18, 34.11, 33.65, 31.96, 29.74, 29.69, 29.66, 29.64, 29.51, 29.49, 29.40, 29.30, 29.28, 29.18, 25.04, 25.00, 24.94, 24.90, 24.80, 22.72, 14.14 ppm.

### 1-2: Synthesis of pentaerythrityl-tri(docosanoate)-monoacrylate (4)

The product **3** (102 g, 92.3 mmol) was dissolved in chloroform (450 mL) while gentle heating was applied. Triethylamine (14 g, 138 mmol, 1.5 eq) was added, and a solution of acryloyl chloride (10 g, 111 mmol) in chloroform (30 mL) was added dropwise. After addition the reaction mixture was stirred for 1 hour at 40°C. The warm reaction mixture was poured into three liters of methanol giving a white precipitate. The precipitate was filtered and thoroughly washed with methanol. The residue was dried in vacuo at 35°C to give 106 g of a white powder (99% yield). Chemical structures of the product **4** are determined by ¹H NMR, ¹³C NMR analysis and MALDI-TOF-MS analysis. Results are shown below.

¹H NMR (400 MHz, CDCl₃): δ 6.41 (dt, *J* = 17.3, 1.3 Hz, 1 H), 6.21 - 6.02 (m, 1 H), 5.87 (dt, *J =* 10.4, 1.3 Hz, 1 H), 4.34 - 4.00 (m, 8 H), 2.43 - 2.18 (m, 6 H), 1.59 (p, *J* = 7.0 Hz, 6 H), 1.25 (s, 108 H), 0.88 (t, *J* = 6.7 Hz, 9 H) ppm. ¹³C NMR (101 MHz, CDCl₃): δ 173.27, 165.52, 131.68, 131.63, 127.72, 127.69, 77.35, 77.24, 77.04, 76.72, 62.58, 62.54, 62.26, 62.21, 42.00, 41.91, 41.83, 34.11, 31.95, 29.73, 29.69, 29.65, 29.51, 29.39, 29.29, 29.16, 24.89, 22.71, 14.13 ppm. MALDI-TOF-MS of tetra(docosanoate) calculated for C₉₃H₁₈₀O₈: m/z = 1425.37, observed [M+Na]⁺ 1448.36; tri(docosanoate)-monoacrylate calculated for C₇₄H₁₄₀O₈: m/z = 1157.055, observed [M+Na]⁺ 1180.04; di(docosanoate)-diacrylate calculated for C₅₅H₁₀₀O₈:m/z = 888.74, observed [M+Na]⁺ 911.72.

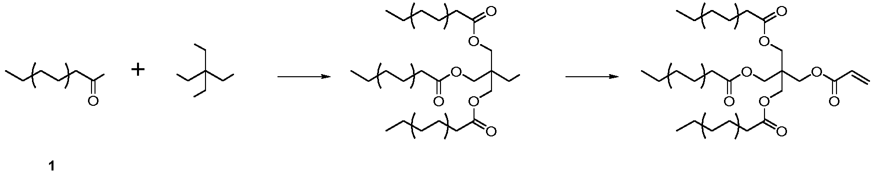

Figure S1. Synthesis route of pentaerythrityl-tri(docosanoate)-monoacrylate. (a) First-step reaction takes place at 190°C for 20 h, then 200°C for 48 h. (b) Second-step esterification. Acryloyl chloride is added, and reaction takes place in the presence of triethylamine and DCM at 20°C for 1 h.

### 1-3: Synthesis of compound II-1

Synthesis route is shown below. For the synthesis experiment, 3,6-Dioxa-1,8-octanedithiol and pentaerythrityl-tri(docosanoate)-monoacrylate are added together into a flask with a molar ratio of 2. Dichloromethane (DCM) is then added as a solvent. The flask is placed in an oil bath at 38°C and stirred until the compounds are completely dissolved. Afterwards 1,8-Diazabicyclo[5.4.0]undec-7-ene (DBU) is added as a catalyst, approximately 4 drops per gram of compound. The reaction mixture is left in the oil bath for 6 hours while stirring. To purify the product, the product mixture is diluted with DCM, and washed with HCl (0,1M) and saturated brine solution for at least twice. Subsequently, the water is removed from the solution by using MgSO4. Finally, the product is dried by solvent evaporation.

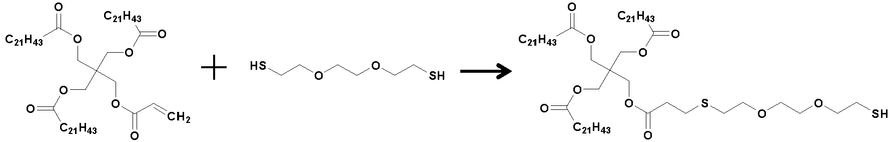

### Ink Example and Comparative Ink Examples

Ink compositions **Ex 1** and **CE1** were prepared by providing the components shown in table 4 in the amount shown in table 4 and mixing the components.

The first ink composition is ink composition **Ex 1,** which is an ink composition according to the present invention.

The second ink composition is ink composition **CE1,** which is an ink composition not according to the present invention.

**Table 4: Ink example Ex 1 and Comparative Ink Example CE1**

| Component | Ex 1 | CE1 |
|---|---|---|
| SR339C | 19.70 wt% | 19.70 wt% |
| SR506D | 19.70 wt% | 19.70 wt% |
| SR531 | 19.70 wt% | 19.70 wt% |
| CN991 | 23.25 wt% | 23.25 wt% |
| SR355 | 1.60 wt% | 1.60 wt% |
| BAPO | 1.07 wt% | 1.07 wt% |
| ITX | 4.02 wt% | 4.02 wt% |
| EDB | 4.29 wt% | 4.29 wt% |
| Genomer 5161 | 5.36 wt% | 5.36 wt% |
| BYK333 | 0.54 wt% | 0.54 wt% |
| phenothiazine | 0.10 wt% | 0.10 wt% |
| compound II-1 | 0.70 wt% | 0 wt% |
| Reaction product 4 | 0 wt% | 0.70 wt% |

### Comparison experiments.

Prints were made by printing the respective ink compositions at different temperatures and different surface coverage percentage. The gloss levels of the printed images were measured. The results are summarized in figure 4.

When comparing the gloss levels, it is observed that the gloss level of prints made with the ink according to the present invention (**Ex 1**) is generally higher than the gloss level of prints made with the ink not according to the present invention (**CE 1**). Thus, using the ink according to the present invention, more glossy images can be made.

Further, it is observed that the gloss level of prints made with the ink according to the present invention **(Ex 1**) changes more with temperature than prints made with the ink according to the present invention (**CE 1**). Hence, when using the ink according to the present invention **(Ex 1**), the gloss level of the print can be selected by selected the temperature. When using the ink not according to the present invention (**CE 1**), the gloss level can hardly be influenced by the temperature.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Radiation-curable inkjet ink composition comprising a radiation curable component and a gelling agent, wherein the gelling agent comprises a thiol functional group.

2. Radiation-curable inkjet ink composition according to claim 1, wherein the gelling agent is a compound according to formula I: 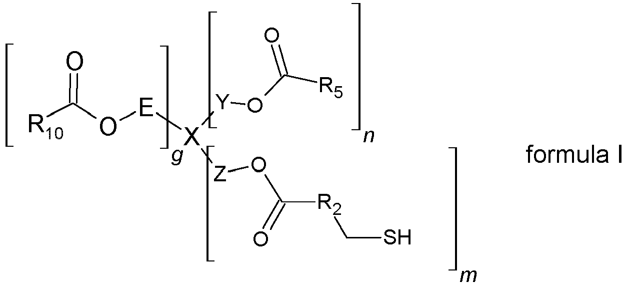 wherein X is selected from C, CH, N , CCH3, CCH2CH3 and CCH2OCHC; E, Y and Z are each individually selected from Cn'H2n', [ - C2'H4O-]b, [-CH(CH3)CH2O-]c wherein n' is an integer in the range of from 1 to 15 , b is an integer in the range of from 1 to 10 and c is an integer in the range of from 1 to 10; R5 and R10 are each individually selected from CtH2t+1, (-CtH2tOuSw-) or (-CtH(2t-t')OqSr-), wherein t is an integer in the range of 1 to 30, u is an integer in the range of from 0 to 15, w is an integer in the range of from 0 to 5, t' is an even number in the range of from 2 to 8, n and g are each individually selected from an integer in the range of from 0 to 5; R2 is selected from an alkyl, an aryl, an alkylaryl, (-CpH2pOqSr-) or (-CpH(2p-p')OqSr-), wherein p is an integer in the range of 1 to 30, q is an integer in the range of from 0 to 15, r is an integer in the range of from 0 to 5, p' is an even number in the range of from 2 to 8, m is an integer in the range of from 1 to 6.

3. Radiation-curable inkjet ink composition according to claim 4, wherein the gelling agent is a compound according to formula II or III: 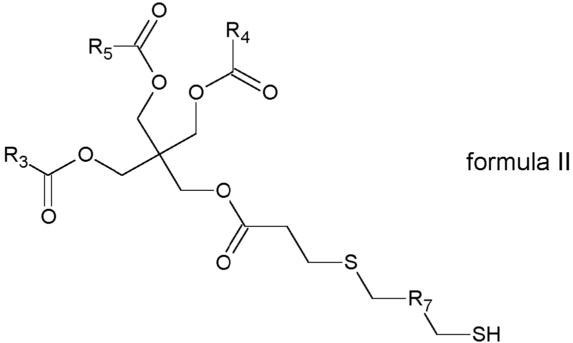 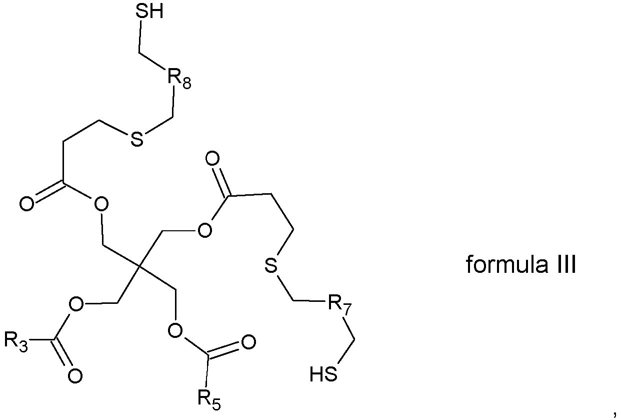 wherein R3, R4 and R5 are each individually selected from CtH2t+1, (-CtH2tOuSw-) or (-CtH(2t-t')OqSr-), wherein t is an integer in the range of 1 to 30, u is an integer in the range of from 0 to 15, w is an integer in the range of from 0 to 5, t' is an even number in the range of from 2 to 8; q is an integer in the range of from 0 to 15; r is an integer in the range of from 0 to 5; and wherein R7 and R8 are each individually selected from a CmC2m moiety, wherein m is an integer in the range of from 1 to 30, an aromatic group, alkylaryl moiety, an oliogoethylene glycol moiety, a polyethylene glycol moiety, an oligopropylene glycol moiety, a polypropylene glycol moiety, a oligoethyleneglycol propyleneglycol moiety and a oligoethyleneglycol propyleneglycol moiety.

4. Radiation-curable inkjet ink composition according to any of the preceding claims, wherein the radiation curable component the ink composition is a monofunctional acrylate.

5. Radiation-curable inkjet ink composition according to claim 4, wherein the ink comprises more than one monofunctional acrylate.

6. Radiation-curable inkjet ink composition according to claim 4 or 5, wherein the ink further comprises an acrylate having two or more acrylate functional groups.

7. Ink container comprising a radiation-curable ink composition according to claims 1-6.

8. Ink set comprising at least one radiation-curable inkjet ink composition according to claims 1-6.

9. Gelling agent, the gelling agent being a compound according to Formula II or Formula III: 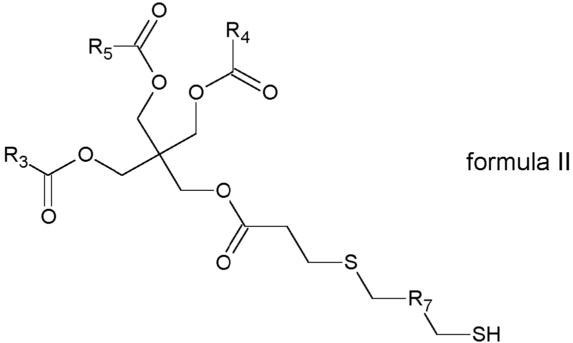 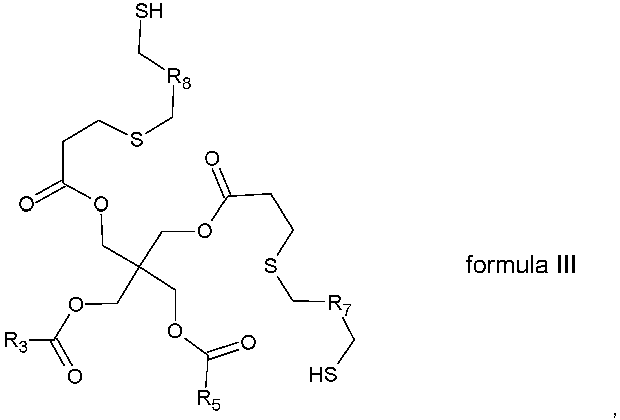 wherein R₃, R₄ and R₅ are each individually selected from CₜH₂ₜ₊₁, (-CₜH₂ₜOᵤS_{w}-) or(-CₜH_{(2t-t')}O_{q}Sᵣ-), wherein t is an integer in the range of 1 to 30, u is an integer in the range of from 0 to 15, w is an integer in the range of from 0 to 5, t' is an even number in the range of from 2 to 8; and wherein R₇ and R₈ are each individually selected from CₘC₂ₘ moiety, wherein m is an integer in the range of from 1 to 30, an aromatic group, alkylaryl moiety and oliogoethylene glycol moiety, a polyethylene glycol moiety, an oligopropylene glycol moiety, a polypropylene glycol moiety, a oligoethyleneglycol propyleneglycol moiety and a oligoethyleneglycol propyleneglycol moiety.

10. A method for preparing a compound according to formula II or formula III is provided, the method comprising the steps of:
• providing a compound according to formula II' or Formula III'; 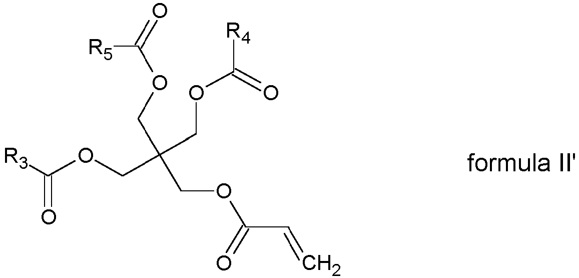 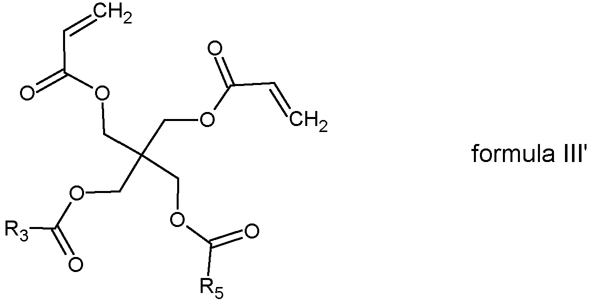
• providing SH(CH2)R7(CH2)SH; and
• in case a compound according to Formula III' is used, providing SH(CH2)R8(CH2)SH;
• dissolving the reagents in a solvent;
• allowing the reagents to react.

11. Method for preparing a radiation-curable inkjet ink composition according to claim 1 - 6, the method comprising the steps of:
• providing a radiation-curable component;
• providing a gelling agent, the gelling agent comprises a thiol functional group;
• mixing the radiation curable component and the gelling agent.

12. Method for applying an image onto a recording medium, the method comprising the steps of :
a. jetting droplets of a radiation-curable inkjet ink composition according to any of claims 1-6 onto the recording medium;
b. curing the radiation-curable inkjet ink composition by irradiating the ink composition using UV radiation.
